# EUROPEAN PATENT SPECIFICATION

(11) **EP 2 178 978 B1**
(45) Date of publication and mention of the grant of the patent: **05.11.2014**
(21) Application number: 08795084.6
(22) Date of filing: 07.08.2008
(51) Int. Cl.: C08L 69/00, C08L 51/00, C08K 3/34, C08L 51/04, C08L 51/08, C08F 265/04, C08F 279/02, C08F 279/04, C08F 283/12, C08L 55/02, C08L 25/12, C08L 83/04

(54) **THERMOPLASTIC COMPOSITION HAVING LOW GLOSS**
THERMOPLASTISCHE ZUSAMMENSETZUNG MIT SCHWACHEM GLANZ
COMPOSITION THERMOPLASTIQUE PRÉSENTANT UNE FAIBLE BRILLANCE

(30) Priority: 10.08.2007 US 891551
(43) Date of publication of application: 28.04.2010
(73) Proprietor: Bayer MaterialScience LLC, Pittsburgh, PA 15205-9741 (US)
(72) Inventor: ROGUNOVA, Marina, Pittsburgh, PA 15241 (US); CHEUNG, James, Y.j., Wexford, PA 15090-9432 (US)
(74) Representative: BIP Patents
(86) International application number: PCT/US2008/009460
(87) International publication number: WO 2009/023115

(56) References cited:
- EP-A2- 0 590 969
- EP-A2- 0 590 969
- WO-A2-01/42361
- JP-A- 7 242 808
- US-A- 3 944 631
- US-A- 4 885 335
- US-A1- 2006 264 579
- US-A1- 2007 135 570

## Description

### Field of the Invention

The invention is directed to a thermoplastic composition and in particular to a molding composition containing aromatic carbonate polymer.

### Technical Background of the Invention

Thermoplastic compositions containing aromatic polycarbonate, including compositions that additionally contain an elastomeric impact modifier, are known and available commercially. Polycarbonate compositions exhibiting a low gloss are also known.

The art is noted to include U.S. Patent 4,460,733 in which disclosed was a polycarbonate composition having low gloss, the composition containing silica characterized by its average particle size and specific surface area. U.S. Patent 4,526,926 disclosed a low gloss polycarbonate polymer blend that contains a rubber modified copolymer such as ABS.

Thermoplastic blends having a low gloss containing polycarbonate, ABS and an impact modifying graft (co)polymer were disclosed in U.S. Patent 4,677,162.

Poly(dimethyl)siloxane that contains pendant glycidylether groups has been disclosed in U.S. patent 5,405,892 as a thermal stabilizer of a pigmented polycarbonate thermoplastic molding composition.

U.S. Patent 5,726,236 disclosed that the impact strength of a thermoplastic molding composition containing aromatic polycarbonate resin and a copolymer is improved upon the incorporation therewith of a particular silicone rubber powder. The silicone rubber powder, added at a level of about 3 to 25 percent, contains a mixture of (a) a polydiorganosiloxane and (b) finely divided silica filler.

U.S. patent 5,556,908 disclosed a thermoplastic polycarbonate molding composition containing silicone rubber powder. Polydiorganosiloxane containing epoxy groups is a component of that powder. The composition is characterized in improved notched Izod impact strength. Low gloss thermoplastic composition with good physical properties containing a blend of a polycarbonate with an acrylonitrile-styrene-acrylate interpolymer and a gloss-reducing amount of a glycidyl (meth)acrylate copolymer was disclosed in U.S. Patent 4,885,335. U.S. Patent 4,902,743 disclosed a low-gloss thermoplastic blend that contains aromatic carbonate polymer, acrylonitrile-butadiene-styrene copolymer; and a polymer of glycidyl methacrylate. Thermoplastic molding compositions having inherent matte or low gloss surface finish containing a blend of polycarbonate, an emulsion grafted ABS polymer, and a poly(epoxide) were disclosed in U.S. Patent 5,026,777 and in CA 2,033,903.

EP 0590969 A2 discloses theromplastic compositions comprising an aromatic carbonate polymer, a graft polymer wherein the rubbery phase is selected from diene rubbers or alkyl acrylate rubbers and a gloss-reducing amount of an epoxy functional silicone. The compositions are characterized by good impact strength, low gloss and high tensile elongation.

### SUMMARY OF THE INVENTION

A thermoplastic composition suitable for making articles having 60° gloss values below 40% is disclosed. The composition comprises
(A) 10 to 94.5 parts by weight (pbw) of an aromatic (co)polycarbonate,
(B) 4 to 40 pbw of a rubber graft (co)polymer in which the rubber is a copolymer of ethylene and propylene and optional diene monomer (herein EP(D)M rubber), and in which the grafted phase is a homopolymer of polar monomers or a copolymer of monovinylidene aromatic monomer and at least one polar comonomer (C) 0.05 to 10 pbw of a siloxane (co)polymer, preferably liquid at room temperature that contains a plurality of siloxane structural units each containing at least one epoxy-functionality (SG) and optional siloxane units that contain no epoxy-functionality (SNG) wherein the weight ratio of (SG) units to the total siloxane units (SG + SNG) is greater than 0.05,
   and optionally
(D) vinyl copolymer

### DETAILED DESCRIPTION OF THE INVENTION

The inventive thermoplastic composition is suitable for preparing articles having 60° gloss values lower than 40 preferably lower than 35 and good impact properties. The composition comprises
(A) 10 to 94.5, preferably 37 to 84 pbw aromatic (co)polycarbonate,
(B) 4 to 40, preferably 10 to 35 pbw rubber graft (co)polymer, in which the rubber is a copolymer of ethylene and propylene and optional diene monomer (herein EP(D)M rubber) and in which the grafted phase is a homopolymer of polar monomers or a copolymer of monovinylidene aromatic monomer and at least one polar comonomer,
(C) 0.05 to 10, preferably 0.1 to 1.5 pbw siloxane (co)polymer, preferably liquid at room temperature that contains a plurality of siloxane structural units each containing at least one epoxy functionality, preferably glycidyl functionality (SG) and optional siloxane units that contain no epoxy functionality (SNG) wherein the weight ratio of (SG) units to the total siloxane units (SG + SNG) is greater than 0.05,
   and optionally
(D) up to 40 pbw, preferably 5 to 35 pbw vinyl copolymer.

### (A) Aromatic (Co)polycarbonate

The term aromatic (co)polycarbonates, refers to homopolycarbonates, copolycarbonates, including polyestercarbonates. These materials are well known and are available in commerce.
(Co)poly(ester)carbonates may be prepared by known processes including melt transesterification process and interfacial polycondensation process (see for instance Schnell's "Chemistry and Physics of Polycarbonates", Interscience Publishers, 1964) and are widely available in commerce, for instance under the trademark Makrolon® from Bayer MaterialScience. Aromatic dihydroxy compounds suitable for the preparation of aromatic (co)poly(ester)carbonates (herein referred to as polycarbonates) conform to formula (I) 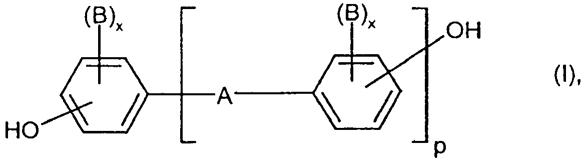 wherein
- A: represents a single bond, C₁- to C₅-alkylene, C₂- to C₅-alkylidene, C₅- to C₆-cycloalkylidene, -O-, -SO-, -CO-, -S-, -SO₂-, C₆- to C₁₂-arylene, to which there may be condensed other aromatic rings optionally containing hetero atoms, or a radical conforming to formula (II) or (III)

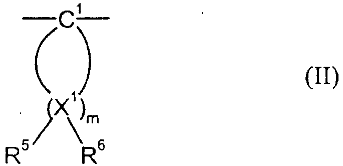

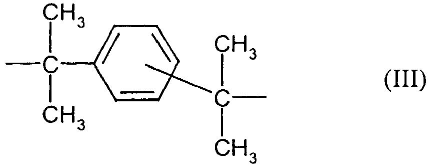

The substituents B independently one of the others denote C₁- to C₁₂-alkyl, preferably methyl, x independently one of the others denote 0, 1 or 2, p represents 1 or 0, and R⁵ and R⁶ are selected individually for each X¹ and each independently of the other denote hydrogen or C₁- to C₆-alkyl, preferably hydrogen, methyl or ethyl, X¹ represents carbon, and m represents an integer of 4 to 7, preferably 4 or 5, with the proviso that on at least one atom X¹, R⁵ and R⁶ are both alkyl groups.

Preferred aromatic dihydroxy compounds are hydroquinone, resorcinol, dihydroxydiphenols, bis-(hydroxyphenyl)-C₁-C₅-alkanes, bis-(hydroxyphenyl)-C₅-C₆-cycloalkanes, bis-(hydroxyphenyl) ethers, bis-(hydroxyphenyl) sulfoxides, bis-(hydroxyphenyl) ketones, bis-(hydroxyphenyl)-sulfones and α,α-bis-(hydroxyphenyl)-diisopropyl-benzenes. Particularly preferred aromatic dihydroxy compounds are 4,4'-dihydroxydiphenyl, bisphenol A, 2,4-bis-(4-hydroxyphenyl)-2-methylbutane, 1,1-bis-(4-hydroxyphenyl)-cyclohexane, 1,1-bis-(4-hydroxyphenyl)-3,3,5-trimethylcyclohexane, 4,4'-dihydroxydiphenyl sulfide, 4,4'-dihydroxydiphenyl-sulfone. Special preference is given to 2,2-bis-(4-hydroxyphenyl)-propane (bisphenol A). These compounds may be used singly or as mixtures containing two or more aromatic dihydroxy compounds.

Chain terminators suitable for the preparation of polycarbonates include phenol, p-chlorophenol, p-tert.-butylphenol, as well as long-chained alkylphenols, such as 4-(1,3-tetramethylbutyl)-phenol or monoalkylphenols or dialkylphenols having a total of from 8 to 20 carbon atoms in the alkyl substituents, such as 3,5-di-tert.-butylphenol, p-isooctylphenol, p-tert.-octylphenol, p-dodecylphenol and 2-(3,5-dimethylheptyl)-phenol and 4-(3,5-dimethylheptyl)-phenol. The amount of chain terminators to be used is generally 0.5 to 10% based on the total molar amount of the aromatic dihydroxy compounds used.

Polycarbonates may be branched in a known manner, preferably by the incorporation of 0.05 to 2.0%, based on the molar amount of the aromatic dihydroxy compounds used, of compounds having a functionality of three or more, for example compounds having three or more phenolic groups. Aromatic polyestercarbonates are known. Suitable such resins are disclosed in U.S. Patents 4,334,053: 6,566,428 and in CA 1,173,998.

Aromatic dicarboxylic acid dihalides for the preparation of aromatic polyester carbonates include diacid dichlorides of isophthalic acid, terephthalic acid, diphenyl ether 4,4'-dicarboxylic acid and naphthalene-2,6-dicarboxylic acid. Particularly preferred are mixtures of diacid dichlorides of isophthalic acid and terephthalic acid in a ratio of from 1:20 to 20:1. Branching agents may also be used in the preparation of suitable polyestercarbonates, for example, carboxylic acid chlorides having a functionality of three or more, such as trimesic acid trichloride, cyanuric acid trichloride, 3,3'-,4,4'-benzophenone-tetracarboxylic acid tetrachloride, 1,4,5,8-naphthalenetetracarboxylic acid tetrachloride or pyromellitic acid tetrachloride, in amounts of 0.01 to 1.0 mol.% (based on dicarboxylic acid dichlorides used), or phenols having a functionality of three or more, such as phloroglucinol, 4,6-dimethyl-2,4,6-tri-(4-hydroxyphenyl)-heptene-2, 4,4-dimethyl-2,4,6-tri-(4-hydroxyphenyl)-heptane, 1,3,5-tri-(4-hydroxyphenyl)-benzene, 1,1,1-tri-(4-hydroxyphenyl)-ethane, tri-(4-hydroxyphenyl)-phenylmethane, 2,2-bis[4,4-bis(4-hydroxyphenyl)-cyclohexyl]-propane, 2,4-bis(4-hydroxyphenyl-isopropyl)-phenol, tetra-(4-hydroxyphenyl)-methane, 2,6-bis(2-hydroxy-5-methyl-benzyl)-4-methylphenol, 2-(4-hydroxyphenyl)-2-(2,4-dihydroxyphenyl)-propane, tetra-(4-[4-hydroxy-phenyl-isopropyl]-phenoxy)-methane, 1,4-bis[4,4'-dihydroxy-triphenyl)-methyl]-benzene, in amounts of from 0.01 to 1.0 mol.%, based on diphenols used. Phenolic branching agents can be placed in the reaction vessel with the diphenols, acid chloride branching agents may be introduced together with the acid dichlorides.

The content of carbonate structural units in the thermoplastic aromatic polyester carbonates may be up to 99 mol.%, especially up to 80 mol.%, particularly preferably up to 50 mol.%, based on the sum of ester groups and carbonate groups. Both the esters and the carbonates contained in the aromatic polyester carbonates may be present in the polycondensation product in the form of blocks or in a randomly distributed manner.

The preferred thermoplastic aromatic polycarbonates have weight-average molecular weights (measured by gel permeation chromatography) of at least 25,000, more preferably at least 26,000. Preferably these have maximum weight-average molecular weight of 80,000, more preferably up to 70,000, particularly preferably up to 50,000 g/mol.

### (B) Rubber Graft (Co)polymer

The rubber graft (co)polymer, component (B) of the inventive composition refers to a grafted rubber wherein the rubber is a copolymer of ethylene and propylene and optional diene monomer (herein EP(D)M rubber) and where the grafted phase is compatible with component A, (co)polycarbonate.

EP(D)M and methods for its preparation have been described in, among others U.S. Patent 3,489,821 and 4,202,948. While a variety of alpha-mono olefins may be used in preparing EP(D)M the preferred elastomer is a terpolymer of ethylene, propylene and ethylenically unsaturated copolymerizable non-conjugated diene monomer. The preferred EP(D)M rubber has a second order transition temperature not higher than 0°C, preferably not higher than -20°C, per ASTM D-746-52T and contains one or more conjugated 1,3-dienes.

The rubber phase of the rubber graft (co)polymer is at least partially linked by grafting and/or by interpenetration of its chains into the other, grafted phase. The well known ASA and SAN-grafted butyl acrylate are commercially available examples.

A preferred class of commercially available ASA resins comprises a crosslinked (meth)acrylate elastomer.

ASA may be prepared by a variety of known methods involving emulsion or bulk polymerization.

Also suitable are rubber graft (co)polymers having core-shell morphology. Examples include products wherein a (meth)acrylate elastomer core is composed of alkyl, aryl, or arylalkyl esters of acrylic or methacrylic acids. It may be prepared by a two-step process in which the (meth)acrylate elastomer core (which may be crosslinked) is covered with a thermoplastic shell of polymethyl methacrylate, polystyrene, styrene-acrylonitrile copolymer, or similar vinyl polymers or copolymers. Suitable such rubber grafts have been disclosed in U.S. Patents 3,944,631, 3,655,824, 3,830,878, 3,991,009, 4,433,102, 4,442,263, and 4,409,363.

Among the suitable rubber graft (co)polymers, mention may be made of a graft (co)polymer having core/shell morphology. It may be obtained by graft polymerizing alkylmethacrylate (such as methylmethacrylate) and optional vinyl comonomer (e.g. styrene) onto a composite rubber core. The core includes interpenetrated and inseparable interpenetrating network (IPN) type of polysiloxane and butylacrylate is characterized in that its glass transition temperature is below 0°C, preferably below -20°C, especially below -40°C. The preferred weight ratio of polysiloxane/ alkylacrylate/ rigid shell is 50-90/5-25/5-25, preferably 75-85/7-12/7-12, most preferably 80/10/10.

The grafted phase that is compatible with (co)polycarbonate includes homopolymers of polar monomers and copolymers of monovinylidene aromatic monomer and at least one polar comonomer. Such copolymers have been described in U.S. Patents 3,509,237; 3,660,535; 3,243,481; 4,221,833 and 4,239,863. Preferably the grafted phased contains at least 49, preferably 65 to 95 weight percent monovinylidene aromatic monomer, and at least 1, preferably 5 to 35 weight percent monoethylenically unsaturated polar monomer.

For the purposes of this invention, a polar monomer is a polymerizable ethylenically unsaturated compound bearing a polar group having a group moment in the range from about 1.4 to about 4.4 Debye units and determined by Smyth, C. P., Dielectric Behavior and Structure, McGraw-Hill Book Company, Inc., New York (1955). Exemplary polar groups include --CN, --NO₂, --CO₂H, --OH, --Br, --Cl, --NH₂ and --OCH₃. Preferably, the polar monomer is an ethylenically unsaturated nitrile such as acrylonitrile and methacrylonitrile with acrylonitrile being especially preferred. Examples of such other polar monomers include α,β-ethylenically unsaturated carboxylic acids and their anhydride, and alkyl, aminoalkyl and hydroxyalkyl esters such as acrylic acid, methacrylic acid, itaconic acid, maleic anhydride, ethyl acrylate, butyl acrylate, methyl methacrylate, hydroxyethyl and hydroxypropyl acrylates, aminoethyl acrylate, and the like.

Exemplary of the monovinylidene aromatic monomers are styrene; α-alkyl monovinylidene monoaromatic compounds (e.g., α-methylstyrene, α-ethylstyrene, α-methylvinyltoluene, α-methyl dialkylstyrenes, etc.); ring-substituted alkyl styrenes (e.g., ortho-, meta-, and para-vinyl toluene, o-ethylstyrene; p-ethylstyrene, 2,4-dimethylstyrene, p-tertiary butyl styrene, etc.); ring-substituted halostyrenes (e.g., o-chlorostyrene, p-chlorostyrene, o-bromostyrene, 2,4-dichlorostyrene, etc.); ring-alkyl, ring-halosubstituted styrenes (e.g., 2-chloro-4-methylstyrene, 2,6-dichloro-4-methylstyrene, etc.); vinyl naphthalene; vinyl anthracene, etc. If so desired, mixtures of such monovinylidene aromatic monomers may be employed. Particularly preferred is styrene and mixtures of styrene and α-methyl styrene.

The rubber graft (co)polymer contains 3 to 80, preferably 5 to 50, percent by weight rubber component as graft base or backbone the balance being the grafted, rigid phase Suitable graft (co)polymers are known and readily available in commerce.

### (C) siloxane (co)polymer

The siloxane (co)polymer suitable in the context of the inventive composition contains a plurality of siloxane structural units each containing at least one epoxy-functionality (SG) and optional siloxane units that contain no epoxy-functionality (SNG) wherein the weight ratio of (SG) units to the total siloxane units (SG + SNG) is greater than 0.05. Glycidyl and glycidyl-ether, in addition to epoxy are embraced within the term "epoxy" as used herein.

The preferred siloxane copolymer conforms structurally to 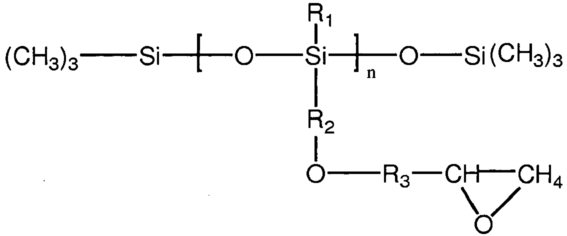 wherein R₁ is C₁₋₄ alkyl or C₆₋₁₄ aryl;R2 denotes (CH₂)ₘ where m is an integer of 1 to 4; and R₃ is (CH₂)ₚ where p is 1 to 4 and *n* is about 1 to 30, preferably 2 to 25.

In a preferred embodiment the siloxane (co)polymer is poly(dimethyl)-siloxane (PDMS) that conforms to the above structure wherein R₁ is methyl, R₂ denotes (CH₂)₃, R₃ is CH₂ and n is about 7-11.

### (D) Vinyl Copolymer

Optional component D of the inventive composition is a copolymer of monovinylidene aromatic monomer and a polar comonomer. Such copolymers have been described in U.S. Patents 3,509,237; 3,660,535; 3,243,481; 4,221,833 and 4,239,863. The vinyl copolymer contains at least 49, preferably 65 to 95 weight percent monovinylidene aromatic monomer, and at least 1, preferably 5 to 35 weight percent monoethylenically unsaturated polar monomer.

The polar monomer has been defined above in connection with the description of component B. Preferably, the polar monomer is an ethylenically unsaturated nitrile such as acrylonitrile and methacrylonitrile with acrylonitrile being especially preferred. Suitable other polar monomers include α,β-ethylenically unsaturated carboxylic acids and their anhydride, and alkyl, aminoalkyl and hydroxyalkyl esters such as acrylic acid, methacrylic acid, itaconic acid, maleic anhydride, ethyl acrylate, butyl acrylate, methyl methacrylate, hydroxyethyl and hydroxypropyl acrylates, aminoethyl acrylate, and the like.

Suitable monovinylidene aromatic monomers are styrene; alpha-alkyl monovinylidene monoaromatic compounds (e.g., α-methylstyrene, α-ethylstyrene, α-methylvinyltoluene, α-methyl dialkylstyrenes, etc.); ring-substituted alkyl styrenes (e.g., ortho-, meta-, and paravinyl toluene, o-ethylstyrene; p-ethylstyrene, 2,4-dimethylstyrene, p-tertiary butyl styrene, etc.); ring-substituted halostyrenes (e.g., o-chlorostyrene, p-chlorostyrene, o-bromostyrene, 2,4-dichlorostyrene, etc.); ring-alkyl, ring-halosubstituted styrenes (e.g., 2-chloro-4-methylstyrene, 2,6-dichloro-4-methylstyrene, etc.); vinyl naphthalene; vinyl anthracene, etc. If so desired, mixtures of such monovinylidene aromatic monomers may be employed. Particularly preferred is styrene and mixtures of styrene and α-methyl styrene. Most suitable vinyl copolymer is styrene/acrylonitrile copolymer.

While not believed critical to the inventive composition the preferred embodiment contains a positive amount of up to 40, preferably 5 to 35 parts by weight of component (D).

The inventive composition may further include additives that are known for their function in the context of thermoplastic compositions that contain poly(ester)carbonates. These include one or more of lubricants, mold release agents, for example pentaerythritol tetrastearate, nucleating agents, antistatic agents, thermal stabilizers, light stabilizers, hydrolytic stabilizers, fillers and reinforcing agents, colorants or pigments, flame retarding agents and drip suppressants.

The inventive compositions may be prepared conventionally using conventional equipment and following conventional procedures.

The inventive composition may be used to produce moldings of any kind by thermoplastic processes such as injection molding, extrusion and blow molding methods.

The Examples which follow illustrate the invention.

### EXAMPLES

The following materials were used In preparing the exemplified compositions:
**Polycarbonate -** homopolycarbonate based on bisphenol A (MFR about 15 g/10 min.).
**Graft rubber 1 -** rubber graft copolymer having core/shell morphology wherein the IPN core contains butyl acrylate and dimethyl siloxane copolymer (T_{g} below 0°C) and where the shell is polymerized of methylmethacrylate. The weight ratio of polysiloxane/butylacrylate/ rigid shell is 80/10/10.
**Graft rubber 2 -** ASA having about 42% relative to its weight poly(butyl acrylate) Tg of -45°C (by DSC). The weight percent ratio of styrene to acrylonitrile is about 5.7 to 1 (by infrared spectroscopy).
**Graft rubber 3 -** a blend of ASA with SAN (80:20)The ASA contains about 45% poly(butyl acrylate (T_{g} -45 °C by DSC). The weight ratio of styrene to acrylonitrile in the ASA is about 7.4 to 1 determined by infrared spectroscopy. The SAN is styrene - acrylonitrile copolymer with about 22 % acrylonitrile, Melt Flow Rate of 3.8 g/10min at 23°C.
**Graft rubber 4 -** SAN grated EPDM having rubber content of at least 60% relative to its weight and particle size 0.2 to 0.3 microns.
**Siloxane 1 -** polysiloxane containing about 2 mol% glycidyl ether structural units.
**Siloxane 2 -** polysiloxane of the invention containing more than 95 mol% glycidyl ether structural units.
**ABS-1 -** graft prepared by mass polymerization, having particle size of about 0.8 microns; acrylonitrile/styrene (67/20) content was 87%; and the butadiene content was 13% the percents refer to weight percents. **ABS-2 -** graft prepared by emulsion polymerization having bimodal particle size distribution of about 0.25 microns and 0.6 microns where the weight ratio between the two modes was 4:1. The acrylonitrile/styrene (70/30) content was 50% and the butadiene content was 50% the percents refer to weight percents.
**ABS-3 -** graft prepared by emulsion polymerization having bimodal particle size distribution of about 0.28 microns and 0.4 microns where the weight ratio between the two modes was 1:1. The content of acrylonitrile/styrene (28/72) was 43% and the butadiene content was 57% the percents refer to weight percents.

The makeup of the exemplified compositions and their properties are shown in the table below. Each of these compositions contained 0.5wt% of a conventional mold release agent and 0.2 wt% of a conventional UV stabilizer, neither of which believed to be critical to the invention.

The gloss (60° Gloss) was determined in accordance with ASTM D523 and the notched Izod impact strength (1/8") was determined at room temperature.

The melt flow rate (MFR) determined per ASTM D 1238 at 260°C; 5Kg load.

The preparations of the compositions and molding of test specimens were conventional.

The tables below summarize the results of these tests.

### Examples 1-6

Each of the compositions shown in Table 1 contained the indicated amount of polycarbonate resin and equal additive amounts of conventional mold release agent (0.5 pbw) and thermal stabilizer (0.2 pbw) neither of which having criticality in the context of the invention.

**Table 1**

| Example | 1 | 2 | 3 | 4 | 5 | 6 |
|---|---|---|---|---|---|---|
| Polycarbonate, pbw | 99.3 | 98.3 | 98.3 | 91.3 | 90.3 | 90.3 |
| Graft rubber, 1 pbw | -- | -- | -- | 8 | 8 | 8 |
| Siloxane 1, pbw | -- | 1.0 | -- | -- | 1.0 | -- |
| Siloxane 2, pbw | -- | -- | 1.0 | -- | -- | 1.0 |
| Properties | | | | | | |
| Gloss, 60° | 101.0 | 101.0 | 100.7 | 73.8 | 88.4 | 28.9 |
| Impact strength, notched Izod, @RT¹, ft lb/in | 1.9 | 14.6 | 2.6 | 14.1 | 14.0 | 12.4 |
| Impact strength, notched Izod, @-20°C, ft lb/in | 1.8 | 2.4 | 2.0 | 13.4 | 12.5 | 11.1 |

| | | | | | | |
|---|---|---|---|---|---|---|
| ¹- Room temperature | | | | | | |

The results point to the surprisingly low gloss values that characterize the inventive composition, a level not attained in compositions wherein the siloxane compound includes a lower concentration of glycidyl ether units. (Compare Example 6 to 5). Importantly the effect is not evidenced in corresponding compositions that contain none of the rubber graft copolymer (Compare Example 2 to 3).

### Examples 7-16

Each of the compositions shown in Table 2 contained in addition to the indicated amount of polycarbonate resin, equal additive amounts of conventional mold release agent (0.5 pbw) and thermal stabilizer (0.2 pbw) neither of which having criticality in the context of the invention. The results point to the efficacy of the particular siloxane compound in lowering the gloss values of the inventive composition.

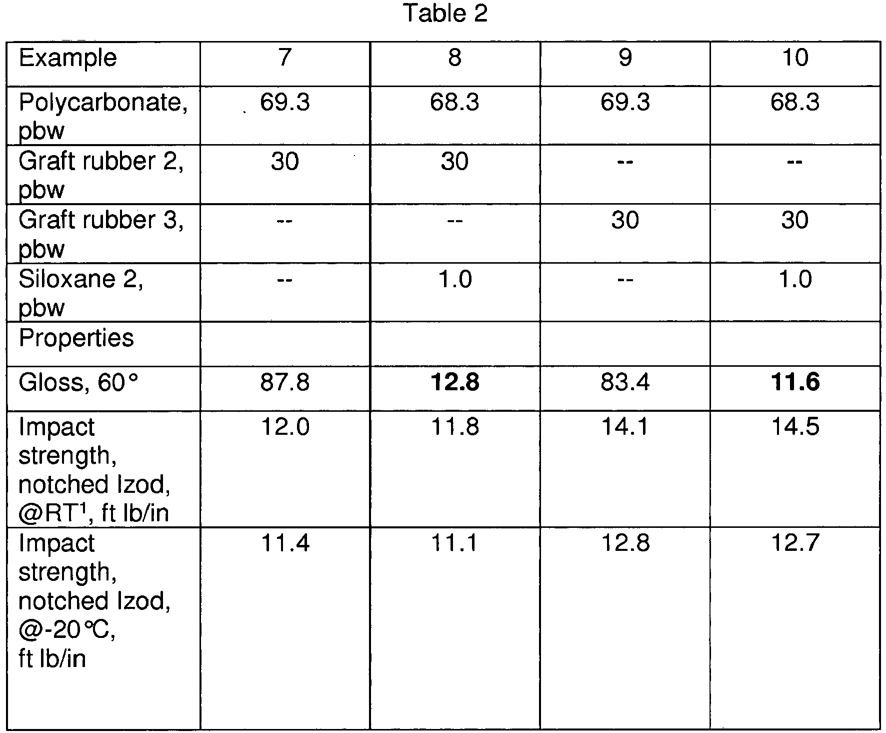

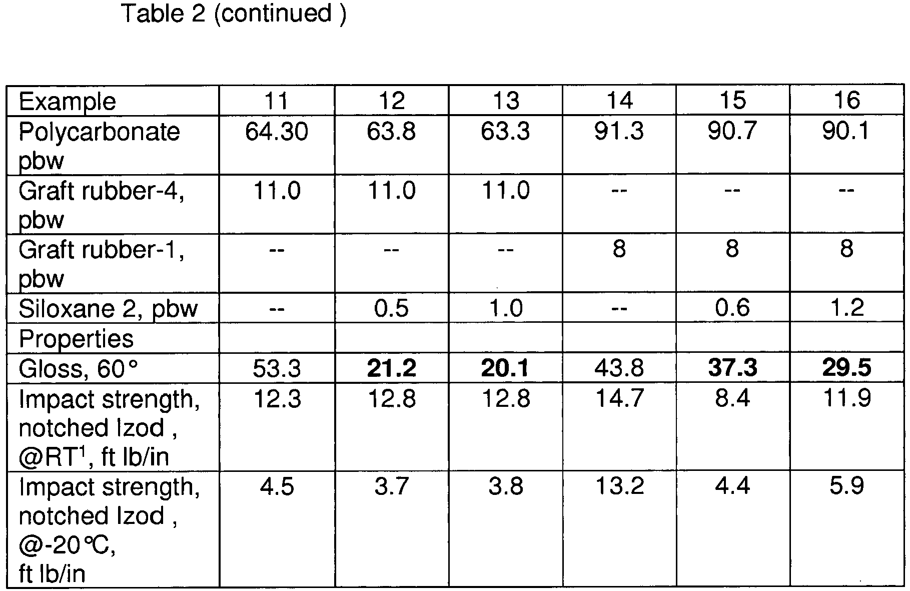

### Examples 17-22

Each of the compositions shown in Table 3 contained in addition to the indicated amount of polycarbonate resin, equal additive amounts of conventional mold release agent (0.5 pbw) and thermal stabilizer (0.2 pbw) neither of which having criticality in the context of the invention. The results point to that the siloxane compound of the invention does not lower the gloss values of corresponding composition in which the rubber graft is ABS.

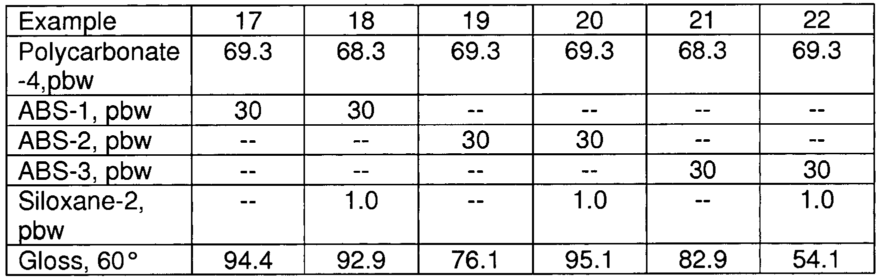

Although the invention has been described in detail in the foregoing for the purpose of illustration, it is to be understood that such detail is solely for that purpose and that variations can be made therein by those skilled in the art without departing from the scope of the invention except as it may be limited by the claims.

## Claims

1. A thermoplastic molding composition comprising
(A) 10 to 94.5 pbw aromatic (co)polycarbonate,
(B) 4 to 40 pbw rubber graft (co)polymer that includes a graft base and a grafted phase in which the graft base is a rubber consisting of copolymer of ethylene and propylene and optional diene monomer, and in which the grafted phase is a homopolymer of polar monomers or a copolymer of monovinylidene aromatic monomer and at least one polar comonomer
(C) 0.05 to 10 pbw siloxane (co)polymer preferably liquid at room temperature that contains a plurality of siloxane structural units each containing at least one epoxy-functionality (SG) and optional siloxane units that contain no epoxy-functionality (SNG) wherein the weight ratio of (SG) units to the total siloxane units (SG + SNG) is greater than 0.05, and optionally
(D) a positive amount up to 40 pbw vinyl (co)polymer, the composition **characterized in that** its 60° gloss in accordance with ASTM D523 is lower than 40.

2. The composition of Claim 1 wherein the amount of aromatic (co)carbonate is 37 to 84 pbw.

3. The composition of Claim 1 wherein the amount of graft (co)polymer is 10 to 35 pbw.

4. The composition of Claim 1 wherein said siloxane structural units comprise poly(dimethyl)siloxane.

5. The composition of Claim 1 wherein the aromatic (co)polycarbonate is homopolycarbonate.

6. The composition of Claim 1 further containing at least one member selected from the group consisting of lubricant, mold release agents, nucleating agent, antistatic agent, thermal stabilizer, light stabilizer, hydrolytic stabilizer, filler, reinforcing agent, colorant, pigment, flame retarding agent and drip suppressant.

7. The composition of Claim 1 wherein the polar monomer is an ethylenically unsaturated nitrile.

8. The composition of Claim 7 wherein said ethylenically unsaturated nitrile is (meth)acrylonitrile.

9. The composition of Claim 1 wherein said monovinylidene aromatic monomer is at least one member selected from the group consisting of styrene, α methylstyrene, α-ethylstyrene, α-methylvinyltoluene, α-methyl dialkylstyrenes, ring-substituted alkyl styrenes, ring-substituted halostyrenes, ring-alkyl, ring-halosubstituted styrenes, vinyl naphthalene and vinyl anthracene.

10. The composition of Claim 1 wherein said siloxane (co)polymer conforms to 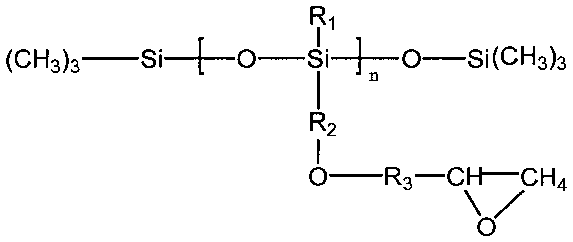 wherein R1 is C1-4 alkyl or C6-14 aryl;R2 denotes (CH2)m where m is an integer of 1 to 4; and R3 is (CH2)p where p is 1 to 4 and n is 1 to 30.

11. The composition of Claim 1 comprising
(A) 37 to 84 pbw aromatic (co)polycarbonate,
(B) 10 to 35 pbw rubber graft (co)polymer that includes a graft base and a grafted phase in which the graft base is a rubber consisting of copolymer of ethylene and propylene and optionally diene monomer, and in which the grafted phase includes a copolymer of at least one monovinylidene aromatic monomer and at least one a polar co-monomer,
(C) 0.1 to 1.5 pbw siloxane (co)polymer that contains a plurality of siloxane structural units each containing at least one glycidyl -functionality (SG) and optional siloxane units that contain no epoxy functionality (SNG) wherein the weight ratio of (SG) units to the total siloxane units (SG + SNG) is greater than 0.05, and
(D) 5 to 35 pbw vinyl (co)polymer, the composition **characterized in that** its 60° gloss in accordance with ASTM D523 is lower than 35.

12. The composition of Claim 11 wherein said siloxane (co)polymer conforms to 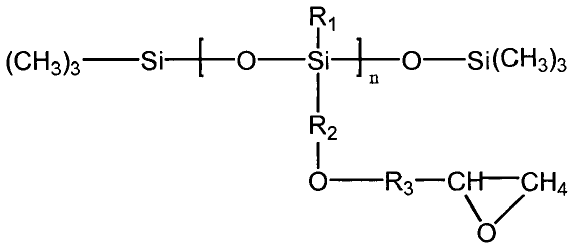 wherein R1 is C1-4 alkyl or C6-14 aryl; R2 denotes (CH2)m where m is an integer of 1 to 4; and R3 is (CH2)p where p is 1 to 4 and n is 1 to 30.

## Patentansprüche

1. Thermoplastische Formmasse, umfassend
(A) 10 bis 94,5 Gt aromatisches (Co)Polycarbonat,
(B) 4 bis 40 Gt Kautschukpfropf(co)polymer mit einer Pfropfgrundlage und einer aufgepfropften Phase, wobei es sich bei der Pfropfgrundlage um einen Kautschuk handelt, der aus einem Copolymer von Ethylen und Propylen und gegebenenfalls Dienmonomer besteht, und wobei es sich bei der aufgepfropften Phase um ein Homopolymer von polaren Monomeren oder ein Copolymer von monovinylidenaromatischem Monomer und mindestens einem polaren Comonomer handelt,
(C) 0,05 bis 10 Gt vorzugsweise bei Raumtemperatur flüssiges Siloxan(co)polymer mit mehreren Siloxan-Struktureinheiten mit jeweils mindestens einer Epoxidfunktionalität (SG) und gegebenenfalls Siloxan-Einheiten, ohne Epoxidfunktionalität (SNG), wobei das Gewichtsverhältnis von (SG)-Einheiten zu den gesamten Siloxaneinheiten (SG + SNG) größer als 0,05 ist, und gegebenenfalls
(D) eine positive Menge bis zu 40 Gt Vinyl(co)polymer,
wobei die Masse **dadurch gekennzeichnet ist, dass** ihr 60°-Glanz gemäß ASTM D523 kleiner als 40 ist.

2. Masse nach Anspruch 1, wobei die Menge an aromatischem (Co)Polycarbonat 37 bis 84 Gt beträgt.

3. Masse nach Anspruch 1, wobei die Menge an Pfropf(co)polymer 10 bis 35 Gt beträgt.

4. Masse nach Anspruch 1, wobei die siloxan-Struktureinheiten Poly(dimethyl)siloxan umfassen.

5. Masse nach Anspruch 1, wobei es sich bei dem aromatischen (Co)Polycarbonat um Homopolycarbonat handelt.

6. Masse nach Anspruch 1, ferner enthaltend mindestens ein Mitglied aus der Gruppe bestehend aus Gleitmitteln, Formtrennmitteln, Nukleierungsmitteln, Antistatika, Wärmestabilisatoren, Lichtstabilisatoren, Hydrolysestabilisatoren, Füllstoffen, Verstärkungsmitteln, Farbmitteln, Pigmenten, Flammschutzmitteln und Tropfunterdrückern.

7. Masse nach Anspruch 1, wobei es sich bei dem polaren Monomer um ein ethylenisch ungesättigtes Nitril handelt.

8. Masse nach Anspruch 7, wobei es sich bei dem ethylenisch ungesättigten Nitril um (Meth)Acrylnitril handelt.

9. Masse nach Anspruch 1, wobei es sich bei dem monovinylidenaromatischen Monomer um mindestens ein Mitglied aus der Gruppe bestehend aus Styrol, α-Methylstyrol, α-Ethylstyrol, α-Methylvinyltoluol, α-Methyldialkylstyrolen, ringsubstituierten Alkylstyrolen, ringsubstituierten Halogenstyrolen, ringalkyl-ringhalogensubstituierten Styrolen, Vinylnaphthalin und Vinylanthracen handelt.

10. Masse nach Anspruch 1, wobei das Siloxan(co)polymer 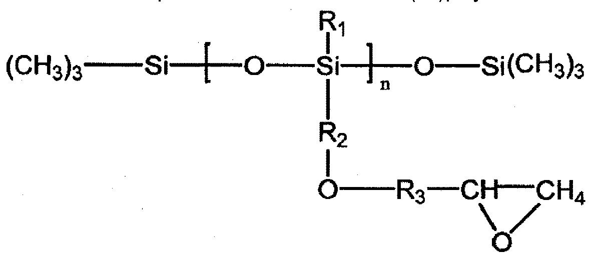 entspricht, wobei R1 für C1-4-Alkyl oder C6-14-Aryl steht; R2 für (CH2)m steht, wobei m für eine ganze Zahl von 1 bis 4 steht; und R3 für (CH2)p steht, wobei p für 1 bis 4 steht und n für 1 bis 30 steht.

11. Masse nach Anspruch 1, umfassend
(A) 37 bis 84 Gt aromatisches (Co)Polycarbonat,
(B) 10 bis 35 Gt Kautschukpfropf(co)polymer mit einer Pfropfgrundlage und einer aufgepfropften Phase, wobei es sich bei der Pfropfgrundlage um einen Kautschuk handelt, der aus einem Copolymer von Ethylen und Propylen und gegebenenfalls Dienmonomer besteht, und wobei die aufgepfropfte Phase ein Copolymer von mindestens einem monovinylidenaromatischen Monomer und mindestens einem polaren Comonomer enthält,
(C) 0,1 bis 1,5 Gt Siloxan(co)polymer mit mehreren Siloxan-Struktureinheiten mit jeweils mindestens einer Glycidylfunktionalität (SG) und gegebenenfalls Siloxan-Einheiten, ohne Epoxidfunktionalität (SNG), wobei das Gewichtsverhältnis von (SG)-Einheiten zu den gesamten Siloxaneinheiten (SG + SNG) größer als 0,05 ist, und
(D) 5 bis 35 Gt Vinyl(co)polymer,
wobei die Masse **dadurch gekennzeichnet ist, dass** ihr 60°-Glanz gemäß ASTM D523 kleiner als 35 ist.

12. Masse nach Anspruch 11, wobei das Siloxan(co)polymer 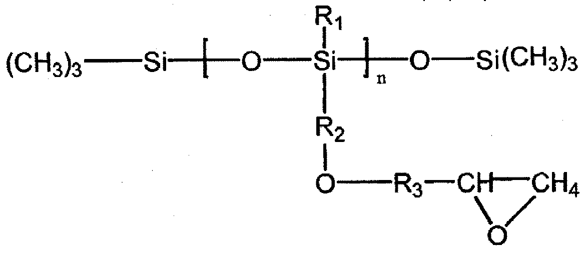 entspricht, wobei R1 für C1-4-Alkyl oder C6-14-Aryl steht; R2 für (CH2)m steht, wobei m für eine ganze Zahl von 1 bis 4 steht; und R3 für (CH2)p steht, wobei p für 1 bis 4 steht und n für 1 bis 30 steht.

## Revendications

1. Composition de moulage thermoplastique comprenant :
(A) 10 à 94,5 parties en poids d'un (co)polycarbonate aromatique,
(B) 4 à 40 parties en poids d'un (co)polymère greffé de type caoutchouc, qui comprend une base de greffage et une phase greffée, dans lequel la base de greffage est un caoutchouc constitué d'un copolymère d'éthylène et de propylène et d'un monomère diène optionnel, et dans lequel la phase greffée est un homopolymère de monomères polaires ou un copolymère d'un monomère aromatique monovinylidène et d'au moins un comonomère polaire,
(C) 0,05 à 10 parties en poids d'un (co)polymère siloxane préférablement liquide à la température ambiante, qui contient une pluralité d'unités structurales siloxane contenant chacune au moins une fonctionnalité époxy (SG) et des unités siloxane optionnelles qui ne contiennent pas de fonctionnalité époxy (SNG), dans lequel le rapport pondéral des unités (SG) contre les unités siloxane totales (SG + SNG) est supérieur à 0,05, et optionnellement
(D) une quantité positive de jusqu'à 40 parties en poids d'un (co)polymère vinylique, la composition étant **caractérisée en ce que** son brillant à 60°, mesuré selon ASTM D523, est inférieur à 40.

2. Composition selon la revendication 1, dans laquelle la quantité de (co)polycarbonate aromatique est de 37 à 84 parties en poids.

3. Composition selon la revendication 1, dans laquelle la quantité de (co)polymère greffé est de 10 à 35 parties en poids.

4. Composition selon la revendication 1, dans laquelle lesdites unités structurales siloxane comprennent du poly(diméthyl)siloxane.

5. Composition selon la revendication 1, dans laquelle le (co)polycarbonate aromatique est un homopolycarbonate.

6. Composition selon la revendication 1, comprenant en outre au moins un élément sélectionné dans le groupe constitué d'un lubrifiant, d'un agent de démoulage, d'un agent de nucléation, d'un agent antistatique, d'un stabilisant thermique, d'un stabilisant à la lumière, d'un stabilisant hydrolytique, d'une charge, d'un agent de renforcement, d'un colorant, d'un pigment, d'un agent ignifuge et d'un agent anti-égouttement.

7. Composition selon la revendication 1, dans laquelle le monomère polaire est un nitrile à insaturation éthylénique.

8. Composition selon la revendication 7, dans laquelle ledit nitrile à insaturation éthylénique est le (méth)acrylonitrile.

9. Composition selon la revendication 1, dans laquelle ledit monomère aromatique monovinylidène est au moins un élément sélectionné dans le groupe constitué d'un styrène, d'un α-méthylstyrène, d'un α-éthylstyrène, d'un α-méthylvinyltoluène, d'α-méthyldialkylstyrènes, d'alkylstyrènes substitués sur le cycle, d'halostyrènes substitués sur le cycle, de styrènes substitués sur le cycle par un groupe alkyle et par un halogène, d'un vinylnaphtalène et d'un vinylanthracène.

10. Composition selon la revendication 1, dans laquelle ledit (co)polymère siloxane est conforme à : 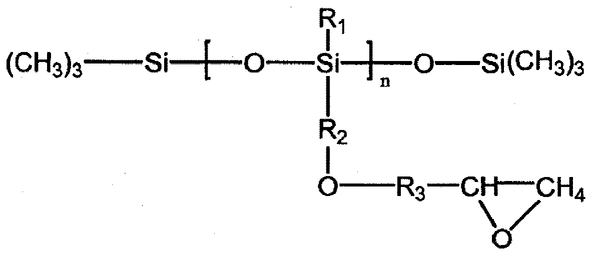 où R₁ est un groupe alkyle C₁-C₄ ou un groupe aryle C₆-C₁₄ ; R₂ représente un groupe (CH₂)m où m est un nombre entier de 1 à 4 ; R₃ est un groupe (CH₂)p où p vaut de 1 à 4 ; et n vaut de 1 à 30.

11. Composition selon la revendication 1, comprenant :
(A) 37 à 84 parties en poids d'un (co)polycarbonate aromatique,
(B) 10 à 35 parties en poids d'un (co)polymère greffé de type caoutchouc, qui comprend une base de greffage et une phase greffée, dans lequel la base de greffage est un caoutchouc constitué d'un copolymère d'éthylène et de propylène et d'un monomère diène optionnel, et dans lequel la phase greffée comprend un copolymère d'au moins un monomère aromatique monovinylidène et d'au moins un comonomère polaire,
(C) 0,1 à 1,5 partie en poids d'un (co)polymère siloxane qui contient une pluralité d'unités structurales siloxane contenant chacune au moins une fonctionnalité glycidyle (SG) et des unités siloxane optionnelles qui ne contiennent pas de fonctionnalité époxy (SNG), dans lequel le rapport pondéral des unités (SG) contre les unités siloxane totales (SG + SNG) est supérieur à 0,05, et
(D) 5 à 35 parties en poids d'un (co)polymère vinylique, la composition étant **caractérisée en ce que** son brillant à 60 °, mesuré selon ASTM D523, est inférieur à 35.

12. Composition selon la revendication 11, dans laquelle ledit (co)polymère siloxane est conforme à : 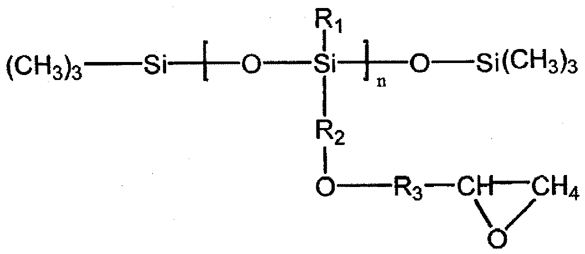 où R₁ est un groupe alkyle C₁-C₄ ou un groupe aryle C₆-C₁₄ ; R₂ représente un groupe (CH₂)m où m est un nombre entier de 1 à 4 ; R₃ est un groupe (CH₂)p où p vaut de 1 à 4 ; et n vaut de 1 à 30.
